# EUROPEAN PATENT SPECIFICATION

(11) **EP 2 630 368 B1**
(45) Date of publication and mention of the grant of the patent: **31.12.2014**
(21) Application number: 11793508.0
(22) Date of filing: 22.11.2011
(51) Int. Cl.: F03D 1/06, F03D 11/00, F03D 7/02

(54) **WIND TURBINE**
WINDTURBINE
EOLIENNE

(43) Date of publication of application: 28.08.2013
(73) Proprietor: Mitsubishi Heavy Industries, Ltd., Tokyo 108-8215 (JP)
(72) Inventor: ZAEHR, Matthias, London, Greater London W1K 6LW (GB)
(74) Representative: RGTH
(86) International application number: PCT/JP2011/006480
(87) International publication number: WO 2013/076754

(56) References cited:
- EP-A2- 2 045 464
- WO-A1-2007/006301
- US-A1- 2004 240 997
- US-A1- 2008 213 095
- US-A1- 2011 142 631

## Description

### Technical Field

The invention relates to a wind turbine comprising a reinforcing element to reduce deformations of a pitch bearing.

### Background Art

A wind turbine known in the art comprises a hub to which at least one blade is mounted. In order to be able to control the load acting on the rotor blade of the wind turbine, the mounting of the blade to the hub is often done by means of a pitch bearing comprising an inner bearing ring and an outer bearing ring so that the blade can be pitched with respect to the incoming wind. In this case, the rotor blade is connected to the inner bearing ring of the pitch bearing, while the outer bearing ring is connected to the hub.

Since the forces and moments resulting from the wind acting on the rotor blades have to be transmitted to the hub of the wind turbine generator, the pitch bearing is subjected to extreme strains and loads leading to damages and distortions of the pitch bearing. As the trend in wind turbine development is towards an increased size of wind turbines, the size of the blades as well as the loads to be transferred increase accordingly. Due to this development, the pitch bearing as the intermediate element of the load transfer between the blade and the hub is even more prone to damages and distortions.

In order to ensure the durability and functionality of the pitch bearing it is known to use reinforcing elements for the bearing rings. In US 20080213095 A1, a reinforcing element is disclosed which is positioned at the axial end of the outer being ring. In addition, a further reinforcing element can be positioned at the axial lower end of the inner bearing ring. However, the arrangement at the axial ends of the bearing rings is disadvantageous as due to the loads acting on the bearing rings radial forces result whose strength depend on the axial location. The reinforcing element which is located axially to the bearing ring could experience other forces then the bearing ring itself leading to a disadvantageous load distribution for the reinforcing element and the bearing ring as well as their connection to each other.

EP 2 045 464 A2 discloses reinforcing plates at the axial ends of a cylindrical bearing ring.

In US 2004/0240997 A1 a bearing arrangement arranged in the volume region of a lubricant chamber together with a gear of a drive is disclosed.

WO 2007/006301 A 1 discloses a pitch bearing for a wind turbine blade comprising an outer ring, an inner ring and a center ring.

In US 2008/0213095 A1 an outer ring is disclosed which is disposed at the free end of the outer bearing ring of a pitch bearing.

US 2011/0142631 discloses an inner ring gear arranged along the inner wall of the inner bearing ring of a pitch bearing.

### Summary of Invention

It is the object of the present invention to provide an improved wind turbine with an enhanced pitch bearing stiffening function. A further object of the invention is to improve the durability and functionality of the pitch bearing.

According to the present invention, the wind turbine comprises a hub, at least one blade and at least one pitch bearing. The at least one blade of the wind turbine blade is pivotably installed at the hub by means of the pitch bearing which comprises an inner bearing ring and an outer bearing ring. While the blade is preferably mounted to the inner bearing ring of the pitch bearing, in particular by a bolt connection, the hub is preferably mounted to the outer bearing ring. Between the two bearing rings rolling elements are disposed which allow the rotation of the bearing rings with respect to each other so that the blade mounted to the inner bearing ring can be pivoted around its longitudinal axis.

Furthermore, the wind turbine comprises a reinforcing element for enhancing the stiffness of the inner bearing ring of the pitch bearing. The inner bearing ring has an inner wall in radial direction and a first end and a second end in axial direction. The reinforcing element is arranged in such a way that it adjoins the inner wall of the inner bearing ring, i.e. the reinforcing element is arranged to be in contact with the inner wall of the inner bearing ring. By the use of the reinforcing element, axial and radial deformations of the bearing rings are reduced.

The inner wall of the inner bearing ring and the reinforcing element have a contact area between them. In addition, the inner wall of the inner bearing ring comprises an inner ring gear which is used for pitch rotation. The inner ring gear and the contact area between the inner wall of the inner bearing ring and the reinforcing element are disposed next to each other in axial direction of the inner bearing ring. In this context, the inner bearing ring and the reinforcing element can be arranged along the axial direction of the inner bearing ring one after another in such a way that they adjoin each other or alternatively that there is still a part of the inner wall of inner bearing ring which does not comprise an inner ring gear but is also not adjoined to the reinforcing element. The inner ring gear is disposed at the inner wall of the inner bearing ring in such a way that it provides a supporting surface for the reinforcing element wherein the supporting surface extends in radial direction of the inner bearing ring. In this way, the geometry of the inner bearing ring can be used for positioning and supporting the reinforcing element. Preferably, the reinforcing element ends at flush level with said supporting surface with one end and, in particular, it also ends at flush level with at least one axial end of the inner bearing ring with the other end.

In a preferred embodiment of the invention, the reinforcement element is mounted to the inner wall of the inner bearing ring. In an especially preferred embodiment the reinforcing element is not disposed between the blade and the pitch bearing, therefore reducing the number of intersection surfaces in the longitudinal direction of the blade compared to an arrangement between the blade and the pitch bearing.

In a further preferred embodiment, the inner ring gear and the contact area between the inner wall of the inner bearing ring and the reinforcing element are arranged adjoining each other and extend along the entire axial length of the inner radial wall so that they cover the inner radial wall of the inner bearing ring entirely from its first axial end to the second axial end.

In another preferred embodiment of the invention, the reinforcing element does axially not extend beyond the first end and the second end of the inner bearing ring respectively. The reinforcing element is hence restricted to the distance between the first end and the second end of the inner bearing ring in axial direction. Preferably, the reinforcing element ends at flush level with at least one of the axial ends of the inner bearing ring.

In a preferred embodiment of the invention, the reinforcing element has an outer face in radial direction of the inner bearing ring which partly adjoins the radial inner wall of the blade and partly adjoins the inner wall of the inner bearing ring. Preferably, part of the reinforcing element can be mounted to the inner wall of the blade, while another part of the reinforcing element can be mounted to the inner wall of the inner bearing ring. Further, it is advantageous when the outer face is formed continuous.

According to another preferred embodiment of the invention, part of the reinforcing element is disposed between the blade and the inner bearing ring, preferably with its outer surface ending at flush level with the outer radial wall of the blade. Due to the partial arrangement of the reinforcement element between the blade and the inner bearing ring, the reinforcing element is fixated in addition to a possible installation to the inner wall of the inner bearing ring.

In another embodiment of the invention, the reinforcing element has the shape of a ring or circular plate and preferably has at least one opening in axial direction. Alternatively, the reinforcing element can be at least one reinforcing web or bar.

In another embodiment of the invention, the radial outer wall of the reinforcing element comprises a step. Preferably, the step defines a first part and a second part of the reinforcing element in axial direction comprising different diameters. In other words, the reinforcing element is formed as a two-step annular portion. The first part has a smaller outer diameter than the second part and is arranged adjoining the inner wall of the inner bearing ring, while the second part with the bigger outer diameter is partly arranged between the blade and the inner bearing ring. Preferably, the first part and the second part comprise the same inner diameter.

In another preferred embodiment, the reinforcing element is mounted to the inner bearing ring, preferably to its radial inner wall, by heating, such as for example induction heating. The reinforcing element can also be mounted by means of cooling. The connection between reinforcing element and inner bearing ring can also be formed by welding, gluing or press fitting. In particular, the reinforcing element can have a transition fit with the inner bearing ring which allows a secure hold of the reinforcing element but at the same time its disassembly if necessary.

In an alternative preferred embodiment, the reinforcing element is formed integrally with the inner bearing ring. This can be achieved by providing an inner bearing ring with an increased wall thickness wherein the increased wall thickness extends radially to the inside of the inner bearing ring. In other words, the usually cylindrical inner bearing ring comprises a constant outer radial diameter while the inner diameter is decreased in the section with the increased thickness. Preferably, the increased wall thickness has its maximum at one of the axial ends of the inner bearing ring and decreases towards the inner wall of the normally cylindrical inner bearing ring in axial direction.

Preferably, the material of the reinforcing element comprises casted metal, plate metal of fiber reinforced material, such as fiber reinforced plastic. In particular, the reinforcing element is made entirely of one of the above materials.

In a further preferred embodiment of the invention, the stiffness of the connection between the inner bearing ring and the blade corresponds to the stiffness of the connection between the hub and the outer bearing ring. In particular, this is achieved by the use of the reinforcing element which influences the stiffness of the inner bearing ring and therefore the stiffness of the connection between the inner bearing ring and the blade. The corresponding stiffness of the two connections of the pitch bearing has a positive impact on the loads acting on the pitch bearing and consequently its durability. In contrast, a difference in stiffness will result in an uneven distribution of the load within the pitch bearing. This uneven load distribution can result in damages and critical deformations of the bearing rings, such as an ovalization of the bearing rings.

Another embodiment of the invention comprises a hub transition tube and a torque transfer means for transferring the torque of the hub to a generator of the wind turbine. The hub transition tube has a first end and a second end having an outer diameter respectively. The hub transition tube is arranged between the hub and the torque transfer means in such a way that with its first end it is installed at the hub and to its second end the torque transfer means is mounted. The hub transition tube has at least one outer diameter between its first end and its second end which is smaller than the outer diameter of the hub transition tube at its second end.

The torque transfer means, preferably the main shaft of the wind turbine, is preferably housed in the nacelle and rotates with the blades. Preferably, the hub transition tube connects the flange of the torque transfer means and the flange of the hub which usually connects the hub and the torque transfer means.

The above embodiment results in the advantage that the hub can be designed smaller than in some configurations necessary. Normally, the dimensions of the hub are determined by the outer diameter of the flanges of the pitch bearings and the outer diameter of the flange of the torque transfer means in such a way that the hub comprises matching flanges for the connection to the pitch bearings and the torque transfer means respectively. If the hub is dimensioned according to the diameter of the flange of the torque transfer means, the hub would usually have to be enlarged so that its flange matches to the flange of the torque transfer means in order to enable a connection between the two. Due to this dimensioning restriction, the hub can become unnecessary large and heavy leading especially to handling problems and immensely increased component costs and costs of transportation. The above embodiment of the invention provides a hub transition tube which can function as an adapter between differently sized flanges of the hub and the torque transfer means, especially in the above described case that the diameter of the flange of the hub should be dimensioned smaller than the preset diameter of the torque transfer means. Therefore, the hub transition tube allows keeping the hub smaller than usually possible.

In another preferred embodiment, the hub transition tube has one diameter which is both smaller than the diameter of its second end and the diameter of its first end. Preferably, the diameter of the hub transition tube changes continuously from the first end to the second end of the hub transition tube and has a minimum in between the two ends.

In another preferred embodiment of the invention, the outer surface of the hub transition tube follows a curve in a longitudinal section view of the hub transition tube. Preferably, the two curves defined by the outer surface of the hub transition tube as seen in a longitudinal section are continuous functions. In particular, the curves both have a stationary point at which the gradient changes its sign.

According to another preferred embodiment of the invention, the torque transfer means and the hub transition tube are connected by means of connection means. Preferably, the torque transfer means and the hub transition tube are connected by a bolt connection wherein the bolt connection either comprises through holes or blind holes for the insertion of bolts.

In another preferred embodiment, the hub transition tube is manufactured as a monolithic part of the hub and projects away from it so that a connection of the hub to the torque transfer means, which is preferably positioned in the nacelle, is possible.

According to another preferred embodiment, part of the hub transition tube adjoins the outer bearing ring of the at least one pitch bearing, preferably the axial end of the outer bearing ring. This arrangement of the hub transition tube enhances the stiffness of the outer bearing ring of the pitch bearing in its axial direction, in particular by the curve of the hub transition tube as seen in a longitudinal section view. Preferably, the wind turbine comprises multiple blades which are mounted to the hub using multiple pitch bearings. In this case, the hub transition tube comprises one part for the adjoining arrangement to the outer bearing ring of each pitch bearing. Preferably, the part of the hub transition tube is connected to the outer bearing ring. In particular, the part of the hub transition tube adjoining the outer bearing ring has a curved form as seen in a longitudinal section which is continuous with the curve defined by the outer surface of the outer bearing ring.

### Brief Description of Drawings

The invention will be described below with reference to the following figures which show in schematic representation.
[fig.1]Figure 1 is a perspective view of a cross section of a blade, a pitch bearing, a hub and a reinforcing element;
[fig.2]Figure 2 is a perspective view of a cross section of a blade, a pitch bearing, a hub and a reinforcing element;
[fig.3]Figure 3 is a perspective view of a cross section of a blade, a pitch bearing, a hub and a reinforcing element;
[fig.4]Figure 4 is a perspective view of a longitudinal cross section of a hub transition tube; and
[fig.5]Figure 5 is a side view of a hub.
[fig.6]Figure 6 is a side view of a hub.

### Description of Embodiments

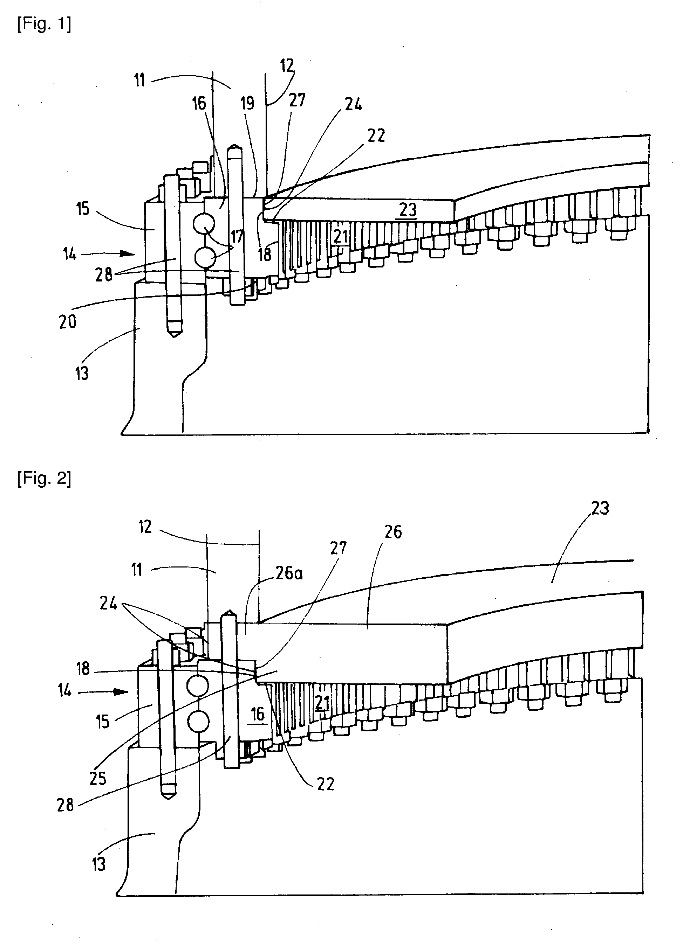

Figure 1 shows a cross section of the connection area between a blade 11, a pitch bearing 14 and a hub 13 of a wind turbine in perspective view. The blade 11 comprises an inner wall 12. The blade 11 is connected to the hub 13 via a pitch bearing 14 which comprises an outer bearing ring 15, an inner bearing ring 16 and rolling elements 17 situated between both rings 15, 16. The inner bearing ring 16 comprises an inner wall 18 in radial direction and a first end 19 and a second end 20 in axial direction.

The blade 11 is mounted to the inner bearing ring 16 by means of a bolt connection utilizing longitudinal bolts 28 which are disposed within the inner bearing ring 16 and the blade 11. The outer bearing ring 15 is also mounted to the hub 13 by means of a bolt connection with longitudinal bolts 28. Due to the rolling elements 17 the inner bearing ring 16 and the outer bearing ring 15 can be rotated with respect to each other so that the blade 11 mounted to the inner bearing ring 16 can be pivoted around its longitudinal axis.

A reinforcing element 23 in form of a ring plate is arranged adjoining the radial inner wall 18 of the inner bearing ring 16 forming a contact area 27 between the reinforcing element 23 and the radial inner wall 18 of the inner bearing ring 16. In this embodiment, the reinforcing element 23 is fixedly mounted to the radial inner wall 18 of the inner bearing ring 16 by induction heating and is not disposed with any of its parts between the blade 11 and the pitch bearing 14. The reinforcing element 23 does not extend beyond the first axial end 19 of the inner bearing ring 16.

The radial inner wall 18 of the inner bearing ring 16 further comprises an inner ring gear 21 which is disposed next to (i.e. below) the contact area 27 in axial direction of the inner bearing ring 16. The contact area 27 and the inner ring gear 21 cover the entire axial length of the radial inner wall 18 of the inner bearing ring 16 from its first axial end 19 to its second axial end 20. Due to the arrangement of the inner ring gear 21, the radial inner wall 18 of the inner bearing ring 16 is formed stepped. The inner ring gear 21 therefore provides a supporting surface 22 extending in radial direction of the inner bearing ring 16 for supporting the reinforcing element 23. The reinforcing element 23 can also be fixedly mounted to the supporting surface 22, either in addition or alternatively to the mounting to the radial inner wall 18 of the inner bearing ring 16.

Figure 2 shows a perspective view of a cross section of the connection area between a blade 11, a pitch bearing 14 and a hub 13 and relates to another embodiment of the present invention. A ring-shaped reinforcing element 23 is with its outer face 24 arranged adjoining the radial inner wall 18 of the inner bearing ring 16. The reinforcing element 23 comprises a first part 25 and a second part 26 which are disposed consecutively in axial direction and arranged adjoining each other. The first part 25 and the second part 26 are integrally formed. The first part 25 of the reinforcing element 23 comprises a smaller outer diameter than the second part 26 of the reinforcing element 23 so that the outer face 24 of the reinforcing element 23 is formed stepped. The first part 25 of the reinforcing element 23 is arranged adjoining the inner wall 18 of the inner bearing ring 16, wherein the outer section 26a of the second part 26 of the reinforcing element 23 is disposed between the blade 11 and the inner bearing ring 16. The reinforcing element 23 is mounted fixedly to the inner bearing ring 16 by gluing the first part 25 to the inner radial wall 18 of the inner bearing ring. In addition, the outer section 26a of the second part 26 of the reinforcing element 23 is fixedly mounted by means of bolts 28 which at the same time mount the blade 11 to the inner bearing ring 16.

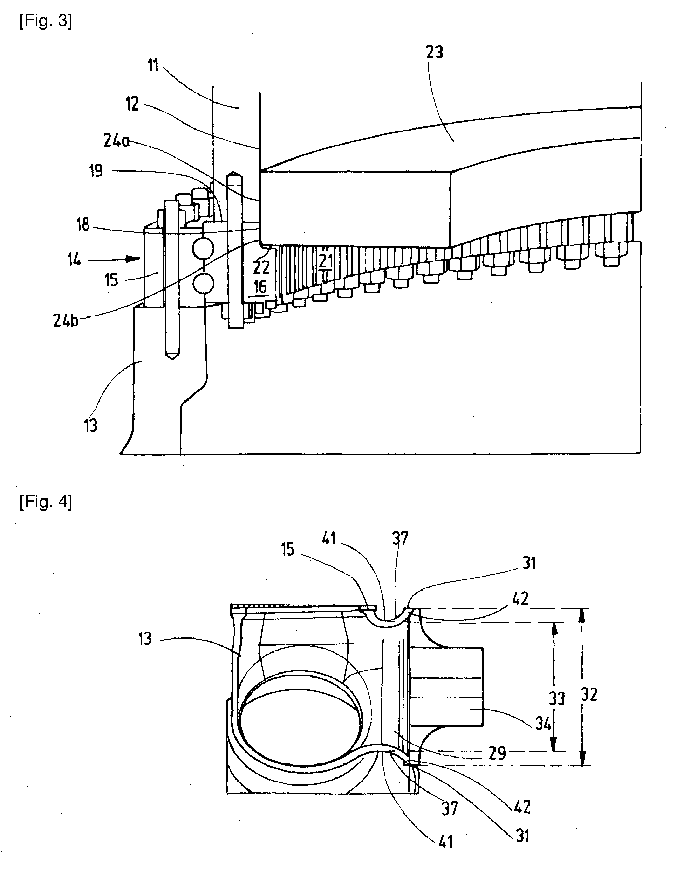

Figure 3 shows a perspective view of a cross section of the connection area between a blade 11, a pitch bearing 14 and a hub 13 of yet another embodiment of the present invention. A reinforcing element 23 is arranged adjoining the radial inner wall 18 of an inner bearing ring 16 wherein the reinforcing element 23 extends beyond the first axial end 19 of the inner bearing ring 16. The outer face 24 of the reinforcing element 23 therefore comprises a first part 24a which is arranged adjoining the radial inner wall 12 of a blade 11 and a second part 24b which is arranged adjoining the radial inner wall 18 of the inner bearing ring 16. The reinforcing element 23 does not extent between the blade 11 and the pitch bearing 14. The reinforcing element 23 is mounted fixedly by means of gluing the second part 24b of the outer face 24 of the reinforcing element 23 to the radial wall 18 of the inner bearing ring 16. In addition, the first part 24a of the outer face 24 of the reinforcing element 23 can be glued to the inner wall 12 of the blade 11.

Figure 4 is a perspective view of a longitudinal cross section of a hub transition tube 29. The hub transition tube 29 in this embodiment is integrally formed with a hub 13 from which it projects away to the outside of the hub 13. Furthermore, the hub transition tube 29 comprises a second end 31 with an outer diameter 32. To the second end 31 of the hub transition tube 29 a torque transfer means 34, i.e. a rotor shaft, is mounted.

At the hub side the hub transition tube 29 is arranged adjoining the axial end of the outer bearing ring 15. Starting from this end towards its second end 31, the hub transition tube 29 extends substantially in the axial direction of the outer bearing ring 15 projecting slightly away from the hub 13. The diameter of the hub transition tube 29 decreases until a stationary point 41 is reached from which the diameter of the hub transition tube 29 increases again towards its second end 31, at which a flange 42 is formed for the connection to the torque transfer means 34. Due to this arrangement of the hub transition tube 29, its outer face 37 is formed curved as seen in the longitudinal cross section. Starting from the hub side towards the second end 31 of the hub transition tube 29, its outer face 37 has a high gradient until a stationary point 41 is reached. From this stationary point 41, the outer face 37 of the hub transition tube 29 has a smaller gradient with an opposite sign.

Due to the curved form of the hub transition tube, it comprises a part in which the outer diameter of the hub transition tube is smaller than the outer diameter 32 of its second end 31. As an example, the outer diameter 33 at the stationary point 41 is shown in figure 4, which is smaller than the outer diameter 32 of the second end 31.

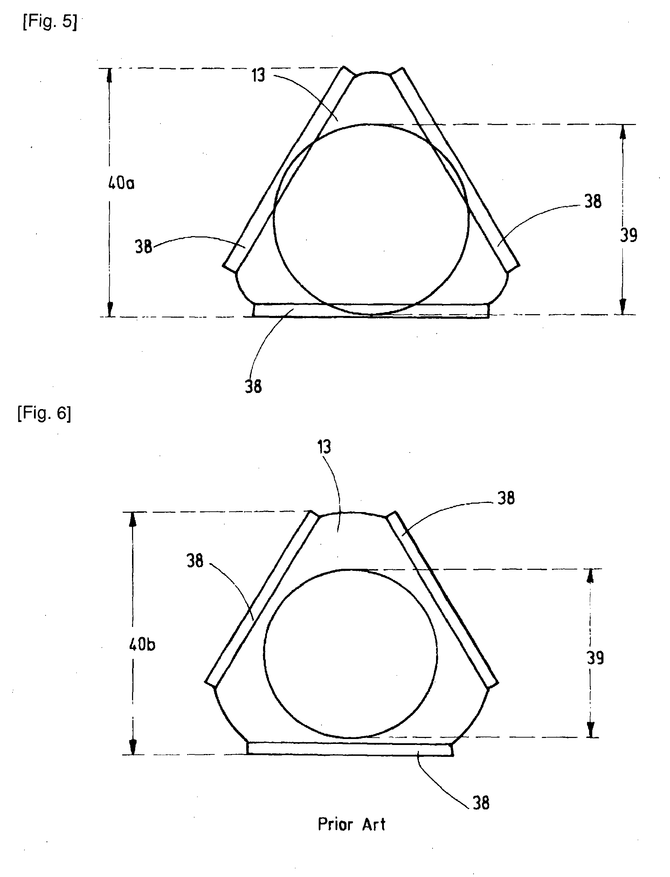

Figure 5 shows a schematic side view of a hub 13. The hub comprises three flanges 38 for the connection to the outer bearings rings of three pitch bearings. The circle indicates the required outer diameter 39 for the connection of the hub 13 to a torque transfer means 34. As it can be seen in the figure, the required outer diameter 39 for the connection to a torque transfer means 34 and the flanges 38 for the connection to the outer bearing rings interfere. In order to be able to connect a hub 13 with the shown dimensions, in particular the height 40a, to a torque transfer means 34 with the required outer diameter 39, a hub transition tube 29 is used. The hub transition tube 29 projects away from the hub 13 in such a way that the connection area to the torque transfer means 34 and the hub 13 are locally separated. In this way, an interference between the dimensions of the hub, especially its height 40a, and the connection requirements to the torque transfer means can be prevented. Therefore, the height 40a of the hub 13 can be smaller than usually possible.

In contrast, figure 6 shows a schematic side view of a hub 13 from the prior art with a height 40b. The hub 13 again comprises three flanges 38 for the connection to the outer bearings rings of three pitch bearings. The circle indicates the required outer diameter 39 for the connection to a torque transfer means 34 which is the same size as the required diameter 39 of figure 5. For connecting the hub 13 to the torque transfer means 34, the hub 13 will have to be enlarged in contrast to the hub of figure 5 so that the required outer diameter 39 for the connection to the torque transfer means 34 does not interfere with the flanges 38 for the connection to the outer bearing rings. Therefore, the height 40b of the hub from prior art of figure 6 is significantly larger than the height 40a of the hub of figure 5.

## Claims

1. A wind turbine, comprising:
a hub (13),
at least one blade (11), said blade (11) being pivotably installed at said hub (13),
at least one pitch bearing (14),
said pitch bearing (14) having an inner bearing ring (16) and an outer bearing ring (15), said inner bearing ring (16) having an inner wall (18) in radial direction and a first end (19) and a second end (20) in axial direction,
and at least one reinforcing element (23) to enhance the stiffness of said pitch bearing (14),
wherein the reinforcing element (23) is arranged adjoining the inner wall (18) of the inner bearing ring (16),
wherein the inner wall (18) of the inner bearing ring (16) and the reinforcing element (23) have a contact area (27) between them,
**characterized in that**
an inner ring gear (21) used for pitch rotation is disposed at the inner radial wall (18) of the inner bearing ring (16), and
wherein the inner ring gear (21) and the contact area (27) are disposed next to each other in axial direction of the inner bearing ring (16),
wherein the inner ring gear (21) is adapted to provide a supporting surface (22) for the reinforcing element (23), said supporting surface (22) extending in radial direction of the inner bearing ring (16).

2. The wind turbine according to claim 1,
wherein the reinforcing element (23) is mounted to the inner wall (18) of the inner bearing ring (16).

3. The wind turbine according to claim 1,
wherein the contact area (27) and the inner ring gear (21) cover the entire axial length of the inner radial wall (18) of the inner bearing ring (16) from its first end (19) to its second end (20).

4. The wind turbine according to claim 1,
wherein the reinforcing element (23) does not extend in axial direction of the inner bearing ring (16) beyond the first end (19) and the second end (20) of the inner bearing ring (16) respectively.

5. The wind turbine according to claim 1,
wherein the blade (11) has an inner wall (12),
wherein the reinforcing element (23) has an outer face (24),
wherein part (24a) of the outer face (24) is arranged adjoining the inner wall (12) of the blade (11), and
wherein part (24b) of the outer face (24) is arranged adjoining the inner wall (18) of the inner bearing ring (16).

6. The wind turbine according to claim 1,
wherein part (26a) of the reinforcing element (23) is disposed between the blade (11) and the inner bearing ring (16).

7. The wind turbine according to claim 1,
wherein the reinforcing element (23) is formed as a ring or a circular plate.

8. The wind turbine according to claim 7,
wherein the reinforcing element (23) has at least one opening in axial direction.

9. The wind turbine according to claim 7,
wherein the reinforcing element (23) has a radial outer wall, and
wherein the radial outer wall of the reinforcing element (23) is formed stepped.

10. The wind turbine according to claim 9,
wherein the reinforcing element (23) comprises a first part (25) and a second part (26) disposed consecutively in axial direction,
said first part (25) comprising a smaller outer diameter than the second part (26),
wherein the first part (25) and the second part (26) are arranged adjoining each other,
wherein the first part (25) is arranged adjoining the radial inner wall (18) of the inner bearing ring (16), and
wherein part (26a) of the second part (26) is disposed between the blade (11) and the inner bearing ring (16).

11. The wind turbine according to claim 1,
wherein the reinforcing element (23) is mounted to the inner bearing ring (16) by means of heating, cooling, welding, gluing or press fitting, and
wherein the reinforcing element (23) is formed integrally with the inner bearing ring (16).

12. The wind turbine according to claim 1,
wherein the connection between the inner bearing ring (16) and the blade (11) comprises a stiffness that corresponds to the stiffness of a connection between the hub (13) and the outer bearing ring (15).

13. The wind turbine according to claim 1, comprising:
a torque transfer means (34) for transferring the torque of the hub (13) to a generator,
a hub transition tube (29), said hub transition tube (29) having a first end and a second end (31),
wherein the first end and the second end (31) have an outer diameter respectively,
wherein the hub transition tube (29) is installed at the hub (13) with its first end,
wherein the torque transfer means (34) is mounted to the second end (31) of the hub transition tube (29), and
wherein the hub transition tube (29) has at least one outer diameter (33) between its first end and its second end (31), said at least one outer diameter (33) being smaller than the outer diameter (32) of the hub transition tube (29) at its second end (31).

14. The wind turbine according to claim 13,
wherein the hub transition tube (29) has at least one outer diameter (33) between its first end and its second end (31) which is smaller than the outer diameter of the hub transition tube (29) at its first end.

15. The wind turbine according to claim 13,
wherein the outer surface (37) of the hub transition tube (29) as seen in a longitudinal section is formed curved.

16. The wind turbine according to claim 13,
wherein the torque transfer means (34) and the hub transition tube (29) are connected by means of connection means.

17. The wind turbine according to claim 13,
wherein the hub transition tube (29) is integrally formed with the hub (13) and projecting away from the hub (13).

18. The wind turbine according to claim 13,
wherein part of the hub transition tube (29) is arranged adjoining the outer bearing ring (15) of the at least one bearing enhancing the stiffness of the pitch bearing (14).

## Patentansprüche

1. Windkraftanlage, umfassend:
eine Nabe (13),
mindestens ein Blatt (11), wobei das Blatt (11) drehbar an der Nabe (13) befestigt ist,
mindestens ein Pitchlager (14),
wobei das Pitchlager (14) einen inneren Lagerkranz (16) und einen äußeren Lagerkranz (15) aufweist, wobei der innere Lagerkranz (16) eine Innenwand (18) in Radialrichtung und ein erstes Ende (19) und ein zweites Ende (20) in Axialrichtung aufweist,
und mindestens ein Verstärkungselement (23), um die Steifigkeit des Pitchlagers (14) zu verbessern,
wobei das Verstärkungselement (23) an die Innenwand (18) des inneren Lagerkranzes (16) angrenzend angeordnet ist,
wobei die Innenwand (18) des inneren Lagerkranzes (16) und das Verstärkungselement (23) eine Kontaktfläche (27) zwischen sich aufweisen,
**dadurch gekennzeichnet, dass**
ein Innenzahnkranz (21), der für Pitchdrehung verwendet wird, an der radialen Innenwand (18) des inneren Lagerkranzes (16) angeordnet ist, und
wobei der Innenzahnkranz (21) und die Kontaktfläche (27) in Axialrichtung des inneren Lagerkranzes (16) nebeneinander angeordnet sind,
wobei der Innenzahnkranz (21) geeignet ist, eine Tragfläche (22) für das Verstärkungselement (23) bereitzustellen, wobei sich die Tragfläche (22) in Radialrichtung des inneren Lagerkranzes (16) erstreckt.

2. Windkraftanlage nach Anspruch 1,
wobei das Verstärkungselement (23) an der Innenwand (18) des inneren Lagerkranzes (16) befestigt ist.

3. Windkraftanlage nach Anspruch 1,
wobei die Kontaktfläche (27) und der Innenzahnkranz (21) die gesamte Axiallänge der radialen Innenwand (18) des inneren Lagerkranzes (16) von seinem ersten Ende (19) zu seinem zweiten Ende (20) abdecken.

4. Windkraftanlage nach Anspruch 1,
wobei sich das Verstärkungselement (23) in Axialrichtung des inneren Lagerkranzes (16) nicht über das erste Ende (19) bzw. das zweite Ende (20) des inneren Lagerkranzes (16) hinaus erstreckt.

5. Windkraftanlage nach Anspruch 1,
wobei das Blatt (11) eine Innenwand (12) aufweist,
wobei das Verstärkungselement (23) eine Außenseite (24) aufweist,
wobei ein Abschnitt (24a) der Außenseite (24) an die Innenwand (12) des Blatts (11) angrenzend angeordnet ist, und
wobei ein Abschnitt (24b) der Außenseite (24) an die Innenwand (18) des inneren Lagerkranzes (16) angrenzend angeordnet ist.

6. Windkraftanlage nach Anspruch 1,
wobei ein Abschnitt (26a) des Verstärkungselements (23) zwischen dem Blatt (11) und dem inneren Lagerkranz (16) angeordnet ist.

7. Windkraftanlage nach Anspruch 1,
wobei das Verstärkungselement (23) als ein Ring oder eine kreisförmige Platte ausgebildet ist.

8. Windkraftanlage nach Anspruch 7,
wobei das Verstärkungselement (23) mindestens eine Öffnung in Axialrichtung aufweist.

9. Windkraftanlage nach Anspruch 7,
wobei das Verstärkungselement (23) eine radiale Außenwand aufweist, und wobei die radiale Außenwand des Verstärkungselements (23) gestuft ausgebildet ist.

10. Windkraftanlage nach Anspruch 9,
wobei das Verstärkungselement (23) einen ersten Abschnitt (25) und einen zweiten Abschnitt (26) aufweist, die nacheinander in Axialrichtung angeordnet sind,
wobei der erste Abschnitt (25) einen kleineren Außendurchmesser umfasst als der zweite Abschnitt (26),
wobei der erste Abschnitt (25) und der zweite Abschnitt (26) einander angrenzend angeordnet sind,
wobei der erste Abschnitt (25) an die radiale Innenwand (18) des inneren Lagerkranzes (16) angrenzend angeordnet ist, und
wobei ein Abschnitt (26a) des zweiten Abschnitts (26) zwischen dem Blatt (11) und dem inneren Lagerkranz (16) angeordnet ist.

11. Windkraftanlage nach Anspruch 1,
wobei das Verstärkungselement (23) an dem inneren Lagerkranz (16) durch Erwärmen, Kühlen, Schweißen, Kleben oder Einpressen befestigt ist, und
wobei das Verstärkungselement (23) mit dem inneren Lagerkranz (16) einstückig ausgebildet ist.

12. Windkraftanlage nach Anspruch 1,
wobei die Verbindung zwischen dem inneren Lagerkranz (16) und dem Blatt (11) eine Steifigkeit umfasst, die der Steifigkeit einer Verbindung zwischen der Nabe (13) und dem äußeren Lagerkranz (15) entspricht.

13. Windkraftanlage nach Anspruch 1, umfassend:
eine Drehmomentübertragungseinrichtung (34) zum Übertagen des Drehmoments der Nabe (13) an einen Generator,
eine Nabenübergangsröhre (29), wobei die Nabenübergangsröhre (29) ein erstes Ende und ein zweites Ende (31) aufweist,
wobei das erste Ende und das zweite Ende (31) jeweils einen Außendurchmesser aufweisen,
wobei die Nabenübergangsröhre (29) mit ihrem ersten Ende an der Nabe (13) befestigt ist,
wobei die Drehmomentübertragungseinrichtung (34) an dem zweiten Ende (31) der Nabenübergangsröhre (29) befestigt ist, und
wobei die Nabenübergangsröhre (29) mindestens einen Außendurchmesser (33) zwischen ihrem ersten Ende und ihrem zweiten Ende (31) aufweist, wobei der mindestens eine Außendurchmesser (33) kleiner ist als der Außendurchmesser (32) der Nabenübergangsröhre (29) an ihrem zweiten Ende (31).

14. Windkraftanlage nach Anspruch 13,
wobei die Nabenübergangsröhre (29) mindestens einen Außendurchmesser (33) zwischen ihrem ersten Ende und ihrem zweiten Ende (31) aufweist, der kleiner ist als der Außendurchmesser der Nabenübergangsröhre (29) an ihrem ersten Ende.

15. Windkraftanlage nach Anspruch 13,
wobei die Außenfläche (37) der Nabenübergangsröhre (29) bei Betrachtung im Längsschnitt gekrümmt ausgebildet ist.

16. Windkraftanlage nach Anspruch 13,
wobei die Drehmomentübertragungseinrichtung (34) und die Nabenübergangsröhre (29) mithilfe einer Verbindungseinrichtung verbunden sind.

17. Windkraftanlage nach Anspruch 13,
wobei die Nabenübergangsröhre (29) mit der Nabe (13) einstückig ausgebildet ist und von der Nabe (13) weg ragt.

18. Windkraftanlage nach Anspruch 13,
wobei ein Abschnitt der Nabenübergangsröhre (29) an den äußeren Lagerkranz (15) des mindestens einen Lagers angrenzend angeordnet ist, was die Steifigkeit des Pitchlagers (14) verbessert.

## Revendications

1. Eolienne, comprenant :
un moyeu (13),
au moins une pale (11), ladite pale (11) étant installée de manière pivotante sur ledit moyeu (13),
au moins un palier de pas (14),
ledit palier de pas (14) ayant un anneau de palier interne (16) et un anneau de palier externe (15), ledit anneau de palier interne (16) ayant une paroi interne (18) en direction radiale et une première extrémité (19) et une seconde extrémité (20) en direction axiale,
et au moins un élément de renfort (23) pour améliorer la rigidité dudit palier de pas (14),
dans laquelle l'élément de renfort (23) est disposé de manière adjacente à la paroi interne (18) de l'anneau de palier interne (16),
dans laquelle la paroi interne (18) de l'anneau de palier interne (16) et l'élément de renfort (23) ont une zone de contact (27) entre eux,
**caractérisée en ce que**
une couronne dentée interne (21) utilisée pour la rotation par pas est disposée sur la paroi radiale interne (18) de l'anneau de palier interne (16), et
dans laquelle la couronne dentée interne (21) et la zone de contact (27) sont disposées l'une à côté de l'autre en direction axiale de l'anneau de palier interne (16),
dans laquelle la couronne dentée interne (21) est adaptée pour fournir une surface de support (22) pour l'élément de renfort (23), ladite surface de support (22) s'étendant en direction radiale de l'anneau de palier interne (16).

2. Eolienne selon la revendication 1,
dans laquelle l'élément de renfort (23) est monté sur la paroi interne (18) de l'anneau de palier interne (16).

3. Eolienne selon la revendication 1,
dans laquelle la zone de contact (27) et la couronne dentée interne (21) recouvrent toute la longueur axiale de la paroi radiale interne (18) de l'anneau de palier interne (16) depuis sa première extrémité (19) jusqu'à sa seconde extrémité (20).

4. Eolienne selon la revendication 1,
dans laquelle l'élément de renfort (23) ne s'étend pas en direction axiale de l'anneau de palier interne (16) au-delà respectivement de la première extrémité (19) et de la seconde extrémité (20) de l'anneau de palier interne (16).

5. Eolienne selon la revendication 1,
dans laquelle la pale (11) a une paroi interne (12),
dans laquelle l'élément de renfort (23) a une face externe (24),
dans laquelle une partie (24a) de la face externe (24) est disposée de manière adjacente à la paroi interne (12) de la pale (11), et
dans laquelle une partie (24b) de la face externe (24) est disposée de manière adjacente à la paroi interne (18) de l'anneau de palier interne (16).

6. Eolienne selon la revendication 1,
dans laquelle une partie (26a) de l'élément de renfort (23) est disposée entre la pale (11) et l'anneau de palier interne (16).

7. Eolienne selon la revendication 1,
dans laquelle l'élément de renfort (23) est formé en tant qu'un anneau ou une plaque circulaire.

8. Eolienne selon la revendication 7,
dans laquelle l'élément de renfort (23) a au moins une ouverture en direction axiale.

9. Eolienne selon la revendication 7,
dans laquelle l'élément de renfort (23) a une paroi externe radiale, et
dans laquelle la paroi externe radiale de l'élément de renfort (23) est formée de manière étagée.

10. Eolienne selon la revendication 9,
dans laquelle l'élément de renfort (23) comprend une première partie (25) et une seconde partie (26) disposées de manière consécutive en direction axiale,
ladite première partie (25) comprenant un diamètre extérieur plus petit que la seconde partie (26),
dans laquelle la première partie (25) et la seconde partie (26) sont disposées de manière adjacente l'une de l'autre,
dans laquelle la première partie (25) est disposée de manière adjacente à la paroi interne radiale (18) de l'anneau de palier interne (16), et
dans laquelle une partie (26a) de la seconde partie (26) est disposée entre la pale (11) et l'anneau de palier interne (16).

11. Eolienne selon la revendication 1,
dans laquelle l'élément de renfort (23) est monté sur l'anneau de palier interne (16) à l'aide d'un échauffement, d'un refroidissement, d'un soudage, d'un collage ou d'un ajustage serré, et
dans laquelle l'élément de renfort (23) est intégralement formé avec l'anneau de palier interne (16).

12. Eolienne selon la revendication 1,
dans laquelle la connexion entre l'anneau de palier interne (16) et la pale (11) présente une rigidité qui correspond à la rigidité d'une connexion entre le moyeu (13) et l'anneau de palier externe (15).

13. Eolienne selon la revendication 1, comprenant :
un moyen de transmission de couple (34) pour la transmission du couple du moyeu (13) à un générateur,
un tube de transition de moyeu (29), ledit tube de transition de moyeu (29) ayant une première extrémité et une seconde extrémité (31),
dans laquelle la première extrémité et la seconde extrémité (31) ont respectivement un diamètre extérieur,
dans laquelle le tube de transition de moyeu (29) est installé sur le moyeu (13) avec sa première extrémité,
dans laquelle le moyen de transmission de couple (34) est monté sur la seconde extrémité (31) du tube de transition de moyeu (29), et
dans laquelle le tube de transition de moyeu (29) a au moins une diamètre extérieur (33) entre sa première extrémité et sa seconde extrémité (31), ledit au moins un diamètre extérieur (33) étant inférieur au diamètre extérieur (32) du tube à transition de moyeu (29) à sa seconde extrémité (31).

14. Eolienne selon la revendication 13,
dans laquelle le tube de transition de moyeu (29) a au moins un diamètre extérieur (33) entre sa première extrémité et sa seconde extrémité (31), lequel est inférieur au diamètre extérieur du tube de transition de moyeu (29) à sa première extrémité.

15. Eolienne selon la revendication 13,
dans laquelle la surface externe (37) du tube de transition de moyeu (29), lorsque vue en section longitudinale, est formée de manière courbe.

16. Eolienne selon la revendication 13,
dans laquelle le moyen de transmission de couple (34) et le tube de transition de moyeu (29) sont connectés à l'aide d'un moyen de connexion.

17. Eolienne selon la revendication 13,
dans laquelle le tube de transition de moyeu (29) est intégralement formé avec le moyeu (13) et se projette en éloignement du moyeu (13).

18. Eolienne selon la revendication 13,
dans laquelle une partie du tube de transition de moyeu (29) est disposée de manière adjacente à l'anneau de palier externe (15) de l'au moins un palier en améliorant la rigidité du palier de pas (14).
